# EUROPEAN PATENT SPECIFICATION

(11) **EP 4 496 097 B1**
(45) Date of publication and mention of the grant of the patent: **07.10.2026**
(21) Application number: 23770099.2
(22) Date of filing: 19.01.2023
(51) Int. Cl.: H01M 50/298, H01M 50/284, H01M 50/50, H01M 50/296

(54) **POWER SUPPLY DEVICE AND ROUND TERMINAL SECURING STRUCTURE**
STROMVERSORGUNGSVORRICHTUNG UND SICHERUNGSSTRUKTUR FÜR RUNDE ANSCHLUSSKLEMME
DISPOSITIF D'ALIMENTATION ÉLECTRIQUE ET STRUCTURE DE FIXATION DE BORNE RONDE

(30) Priority: 18.03.2022 JP 2022044334
(43) Date of publication of application: 22.01.2025
(73) Proprietor: Panasonic Energy Co., Ltd., Osaka 570-8511 (JP)
(72) Inventor: MAEDA, Yusuke, Kadoma-shi Osaka 571-0057 (JP); YANASE, Dai, Kadoma-shi Osaka 571-0057 (JP); KAWAMURA, Kazuhiro, Kadoma-shi Osaka 571-0057 (JP); KONDO, Hiroshi, deceased (JP)
(74) Representative: Novagraaf International SA
(86) International application number: PCT/JP2023/001562
(87) International publication number: WO 2023/176136

(56) References cited:
- CN-U- 207 558 910
- JP-A- 2002 157 984
- JP-A- 2018 056 071
- JP-A- H1 131 545
- US-A1- 2015 125 739
- US-A1- 2020 395 693
- US-A1- 2021 281 089
- US-B2- 6 390 858

## Description

### TECHNICAL FIELD

The present disclosure relates to a power supply device and a round terminal securing structure.

### BACKGROUND ART

Power supply devices including battery cells connected in series or parallel to one another have been used, for example, as power supplies for portable electric machinery such as electric cleaners and electric tools, as stationary power supplies for server backup for electricity storage or power supply devices in home use, business facility use, or factory use, or as power sources for driving electric assisted bicycles or power supplies for driving electric scooters, electric carts, or vehicles such as hybrid vehicles or electric vehicles (for example, PTL 1).

In such power supply devices, a metal member called a round terminal or a crimp terminal is attached to an end edge of a harness to electrically connect the harness. The round terminal typically has an end including a crimp part and is attached to the harness by crimping the crimp part. The other end of the round terminal has a terminal screw hole to be fastened together with another terminal such as a busbar. Inside the power supply devices, electrical connections are made using the round terminal.

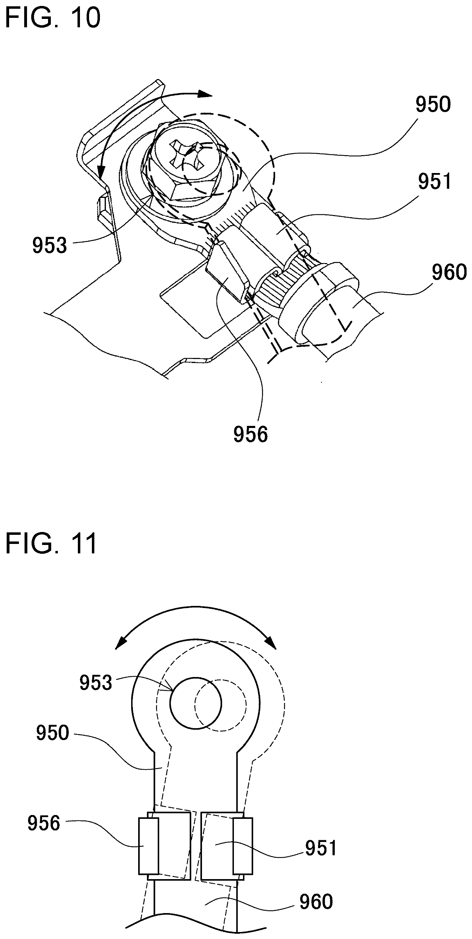

At a connection at which electrical connections are made using the round terminal, a screw is inserted into the terminal screw hole of the round terminal, and accordingly the screw holes need to be aligned with each other. Therefore, as illustrated in FIG. 10, a round terminal securing structure has been proposed, in which both ends of crimp part 951 to crimp round terminal 950 to harness 960 are positioned using standing pieces 956, so that terminal screw hole 953 of round terminal 950 is positioned at a screw hole (see PTL 1).

### The prior art also comprises :

- US 2021/0281089 A1. It relates to a battery charger for a vehicle which comprises the features in the first part of present claim 1, especially a pair of guide pieces for retaining an electric cable ending with a round terminal that must be fastened with a screw to an electrode. The guide pieces consist in elastic jaws tightening a crimped juncture between the cable and the terminal.
- US 6,390,858 B2. Electric terminals are positioned on a resin plate between a pair of guide pins, then they are insert-molded on the plate by locally melting the plate and the pins. Finally, ends of electric wires are installed in rear ends of the terminals, which are crimped after the installation.
- US 2020/0395693 A1. A wiring module is provided, which consists in a case for lodging an electric terminal and adjacent pieces (a fuse and a detection wire), so that their connections are maintained. The terminal comprises holes through which pins belonging to the case pass. This design necessitates a cumbersome case consisting ot two hinged flaps, which are joined and attached to each other for completing the connections. This document does not teach to secure the electric terminal when fastened by a screw.
- US 2015/0125739 A1. It discloses an accumulator arrangement comprising a plurality of individual accumulators and a bus bar composed of successive elements, each secured to a minus pole and a plus pole of the individual accumulators and electrically connected.

### CITATION LIST

### Patent Literature

PTL 1: Japanese Patent Laid-Open Publication No. 2014-220932

### SUMMARY

A repulsive force may be generated depending on the orientation and thickness of harness 960 to which round terminal 950 is attached, as illustrated in FIG. 10, thereby causing a stress to act in a direction of rotation of round terminal 950 as illustrated by a dashed line in FIG. 11. In a configuration illustrated in FIG. 10, a round shaped portion of crimp part 951 is held by standing piece 956, and accordingly the area of contact between standing piece 956 and crimp part 951 is small and frictional resistance is low. As a result, the repulsive force of harness 960 may cause round terminal 950 to rotate, hence displacing round terminal 950 out of the screw hole. When the repulsive force of harness 960 acts in a direction lifting round terminal 950, the configuration illustrated in FIG. 10 does not prevent the action and round terminal 950 may falls out of standing piece 956. When the round terminal is not positioned, the work of screwing the round terminal is inhibited, which reduces work efficiency. In particular, when the number of battery cells to be used increases to achieve higher output and higher capacity of a power supply device, the harness is accordingly thicker, which results in a decrease in the flexibility of the harness and an increase in the repulsive force of the harness. On the other hand, as the power supply device saves space, a limitation on wiring routing more easily occurs due to the internal layout of the power supply device, and accordingly requiring the harness to be bent for arrangement. As a result, the repulsive force of the harness is more easily generated at the end edge in the round terminal.

A power supply device according to an aspect of the present invention includes: the features of claim 5. The round terminal includes a flat part including an end portion having a terminal screw hole passing through the flat part in up and down directions, and a crimp part crimped together with an end of the harness so as to be connected to the end of the harness. The pair of guide pieces respectively holds edges of the flat part of the round terminal in right and left directions perpendicular to the up and down directions while the round terminal is fixed to the housing with a screw inserted into the terminal screw hole.

A round terminal securing structure according to another aspect of the present invention includes the features of claim 1. The crimp part includes a flat part including an end portion having a terminal screw hole passing through the flat part in up and down directions, and a crimp part crimped together with an end of a harness so as to be connected to the end of the harness. The pair of guide pieces respectively hold edges of the flat part of the round terminal in right and left directions perpendicular to the up and down directions while the round terminal is fixed to a connection object with a screw inserted into the terminal screw hole and fastening the round terminal and the connection object together.

In the power supply device and the round terminal securing structure of the aspects of the present disclosure, the guide pieces provided on the right and left sides of the flat part of the round terminal prevent the round terminal from rotating due to the repulsive force of the harness or the like, thus providing stable screwing.

### BRIEF DESCRIPTION OF THE DRAWINGS

FIG. 1 is a perspective view of a power supply device according to Exemplary Embodiment 1.
FIG. 2 is an exploded perspective view of the power supply device shown in FIG. 1.
FIG. 3 is an exploded perspective view of the power supply device shown in FIG. 2 for illustrating a state in which a circuit board is removed from an output unit of the power supply device.
FIG. 4 is a cross-sectional perspective view of the power supply device line IV-IV shown in FIG. 1.
FIG. 5 is an enlarged plan view of the power supply device shown in FIG. 3.
FIG. 6 is an enlarged perspective view of a main part of the power supply device shown in FIG. 5.
FIG. 7 is an exploded perspective view of the power supply device shown in FIG. 6.
FIG. 8 is a cross-sectional view of the power supply device line VIII-VIII shown in FIG. 6.
FIG. 9 is a cross-sectional view of the power supply device line IX-IX shown in FIG. 6.
FIG. 10 is a perspective view of a conventional round terminal securing structure.
FIG. 11 is a perspective view of a power supply device according to a comparative example for illustrating a state in which a round terminal is positioned in the power supply device.

### DETAILED DESCRIPTION

A power supply device according to an aspect of the present disclosure includes the features of claim 5. The round terminal includes a flat part including an end portion having a terminal screw hole passing through the flat part in up and down directions, and a crimp part crimped together with an end of the harness so as to be connected to the end of the harness. The pair of guide pieces respectively hold edges of the flat part of the round terminal in right and left directions perpendicular to the up and down directions while the round terminal is fixed to the housing with a screw inserted into the terminal screw hole.

In a power supply device according to another aspect of the present disclosure, in the above-described aspect, the flat part of the round terminal may have a positioning hole passing through the flat part in the up and down directions, the positioning hole being spaced away from the terminal screw hole. The power supply device may further include a positioning pin inserted into the positioning hole while the round terminal is fixed to the housing with the screw passing through the terminal screw hole. In this configuration, the positioning pin is inserted into the positioning hole to position the round terminal, and prevents the rotation of the round terminal due to a repulsive force of the harness.

In a power supply device according to still another aspect of the present disclosure, in any of the above-mentioned aspects, the positioning hole may be disposed between the terminal screw hole and the crimp part.

In a power supply device according to still another aspect of the present disclosure, in any of the above-mentioned aspects, the positioning hole may have a smaller diameter than the terminal screw hole.

Since the pair of guide pieces has an overlapping surface extending continuously from a corresponding one of right and left sides of the round terminal and overlapping the end portion of the round terminal in the up and down directions while holding a corresponding one of the edges of the round terminal in the right and left directions, the overlapping surfaces of the guide pieces prevent the round terminal from being lifted due to a repulsive force of the harness.

In a power supply device according to still another aspect of the present disclosure, in any of the above-mentioned aspects, the overlapping surfaces of the pair of the guide pieces may have hook shapes.

Since each of the guide pins is disposed on a corresponding one of right and left sides of the flat part of the round terminal at a position different from positions of the pair of guide pieces while the round terminal is fixed to the housing with the screw inserted into the terminal screw hole, not only the guide pieces but also the guide pins prevent undesired rotation of the round terminal. In particular, even when a repulsive force of the harness is high, a combination of the guide pieces and the guide pins resist a rotational force.

In a power supply device according to still another aspect of the present disclosure, in any of the above-mentioned aspects, the guide pins may have circular columnar shapes.

In a power supply device according to still another aspect of the present disclosure, in any of the above-mentioned aspects, the guide pins may be formed unitarily with the housing.

The power supply device according to still another aspect of the present disclosure, in any of the above-mentioned aspects, may further include a rectangular nut aligned with the terminal screw hole of the round terminal, and a nut holder wall holding the rectangular nut to prevent the rectangular nut from rotating.

In a power supply device according to still another aspect of the present disclosure, in any of the above-mentioned aspects, the pair of the guide pieces and the nut holder wall may be formed unitarily with the housing.

The power supply device according to still another aspect of the present disclosure, in any of the above-mentioned embodiments, may further include a U-shaped conductive spacer fixed to the circuit board, the U-shaped conductive spacer having a cross section with a squared U-shape, the U-shaped conductive spacer having a spacer screw hole passing through the U-shaped conductive spacer. The circuit board may have a board through-hole provided therein in a region of the circuit board to which the U-shaped conductive spacer is fixed. In this configuration, even when the round terminal is hidden by the circuit board and is thereby invisible, the work of screwing the round terminal into the circuit board from the back side of the circuit board is surely performed by aligning the terminal screw hole of the round terminal with the spacer screw hole, thereby enhancing reliability.

An exemplary embodiment of the present disclosure will be described with reference to the drawings. Note that the embodiments described below are presented as examples embodying a technical idea of the present disclosure, and the present invention is not limited to the followings. In addition, the present specification is not definitely presented to limit members described in the claims to corresponding members described in the embodiments. In particular, unless otherwise specified, dimensions, materials, shapes, relative positions, and the likes of constituents described in the embodiments are only presented as explanatory examples, and are not intended to limit the scope of the present invention. Note that sizes, positional relationships, and the likes of members illustrated in the drawings may be exaggerated for clarifying the description. Furthermore, in the following description, the same names and reference numerals indicate identical or similar members, and detailed description of the members will be omitted as appropriate. In addition, concerning constituents of the present disclosure, a plurality of constituents may be constituted by an identical member, so that one member functions as a plurality of constituents, or conversely, a function of one member may be shared with and implemented by a plurality of members. In the embodiments, terms indicating directions such as "up and down directions", "right and left directions", and "upper surface" indicate relative directions that depend on only the relative positional relationship between constituents of the power supply device, and do not indicate absolute directions such as a vertical direction.

The power supply device according to the present disclosure can be used, for example, as a power supply for portable electric machinery such as electric cleaners and electric tools, as a stationary power supply for server backup for electricity storage or a power supply device in home use, business facility use, or factory use, or as a power source for driving electric assisted bicycles or a power supply for driving electric scooters, electric carts, or vehicles such as hybrid vehicles or electric vehicles. Hereinafter, the power supply device used as a power source for server backup or the like will be described as an embodiment of the present disclosure.

### Exemplary Embodiment 1

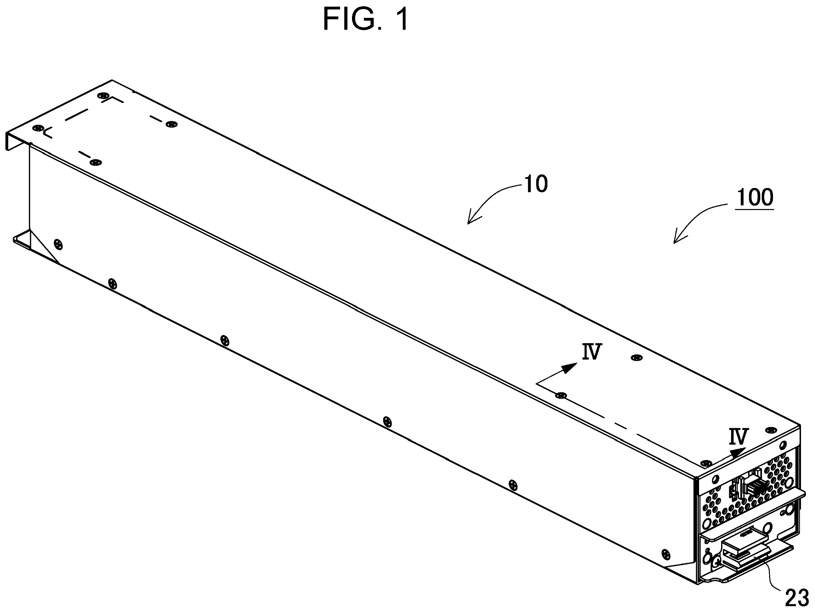

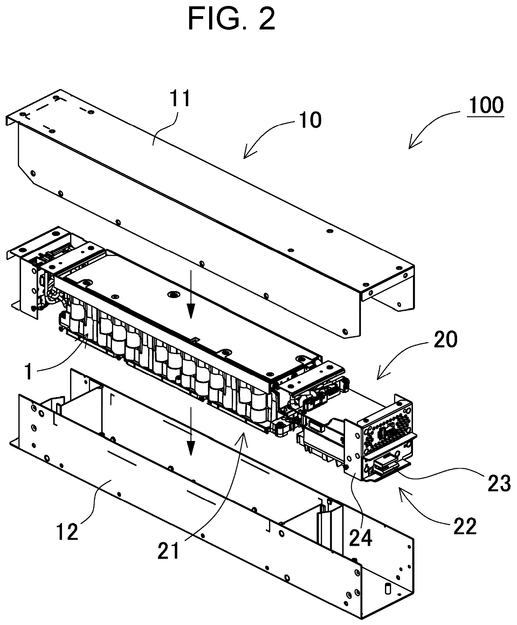

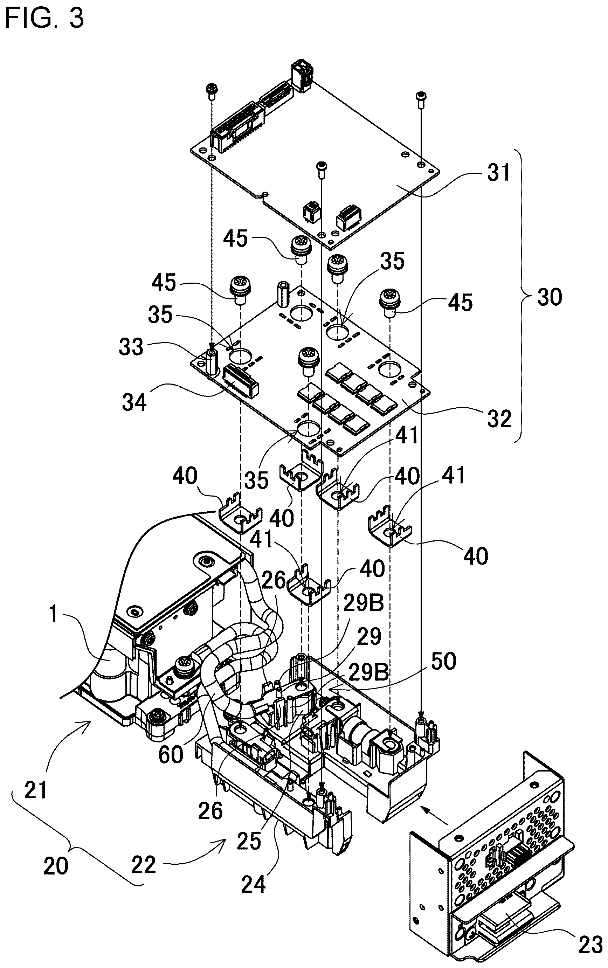

Power supply device 100 according to Exemplary Embodiment 1 of the present disclosure is illustrated in FIGS. 1-3. FIG. 1 is a perspective view of power supply device 100 according to Embodiment 1. FIG. 2 is an exploded perspective view of power supply device 100 shown in FIG. 1. FIG. 3 is an exploded perspective view of the device for illustrating a state in which circuit board 30 is removed from output unit 22 shown in FIG. 2. Power supply device 100 illustrated in these drawings includes housing 10 and internal assembly 20. Housing 10 accommodates contents therein. Housing 10 illustrated in FIG. 1 has a box shape and has an accommodating space accommodating internal assembly 20 therein. In an example shown in FIG. 2, housing 10 is divided into two parts; lid case 11 and opening case 12. Housing 10 is made of, e.g., metal or resin.

Internal assembly 20 includes: battery block 21 including one or more battery cells 1; and output unit 22 including external output terminal 23. In the example illustrated in FIG. 2, battery block 21 includes cylindrical secondary battery cells arranged vertically and accommodated in a battery holder. Battery cells 1 are connected in parallel and series to one another.

### Output Unit 22

Output unit 22 includes unit case 24, circuit board 30, external output terminal 23, and guide piece 26. Unit case 24 constitutes a part of housing 10 configured to accommodate the contents therein and holds circuit board 30 and external output terminal 23. Unit case 24 is molded from an insulating material such as resin.

### Circuit Board 30

Electronic circuits are mounted on circuit board 30. The electronic circuits may be a voltage detection circuit configured to detect the total potential or intermediate potential of a battery assembly including battery cells 1 connected in series or parallel to one another, a control circuit configured to control charging and discharging, and a safety circuit. Circuit board 30 has a rectangular shape.

In an example in FIG. 3, circuit board 30 includes two boards: first board 31 and second board 32. First board 31 and second board 32 are spaced away from each other via spacer 33 and coupled to each other. First board 31 and second board 32 are electrically connected to each other via board connector 34. U-shaped conductive spacers 40 are fixed to a lower surface of second board 32.

### U-shaped Conductive Spacer 40

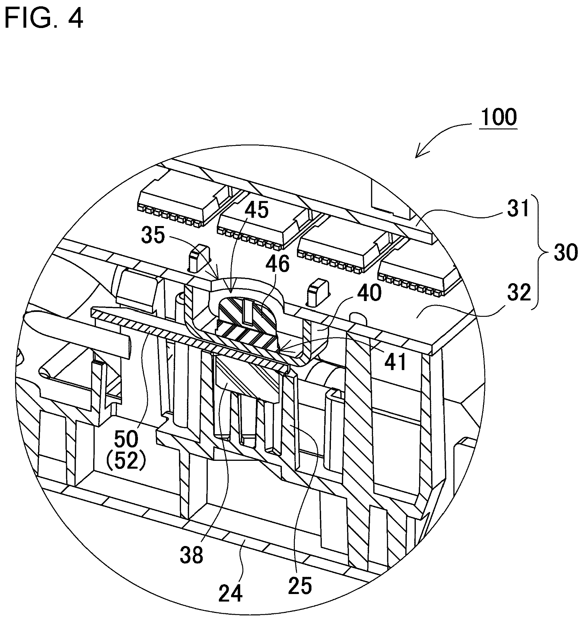

U-shaped conductive spacer 40 has a cross section with a squared U-shape. As indicated by the cross-sectional view of FIG. 4, U-shaped conductive spacer 40 is electrically connected to later-described round terminal 50 by screw 45. U-shaped conductive spacer 40 has spacer screw hole 41 in a U-shaped upper surface thereof so that screw 45 is screwed. Spacer screw hole 41 passes through conductive spacer 40 in up and down directions D1.

In the example in FIG. 3, U-shaped conductive spacer 40 is screwed to unit case 24 from a lower surface of second board 32 (the upper side in FIG. 3) by screw 45. Board through-hole 35 is large enough to allow screw head 46 of screw 45 to be inserted thereinto is opened in the lower surface of a portion of second board 32 to which U-shaped conductive spacer 40 is attached. Thus, second board 32 to which U-shaped conductive spacer 40 has been previously soldered is placed on unit case 24 in which rectangular nut 38 and round terminal 50 have been previously disposed. Then, U-shaped conductive spacer 40 is fastened to round terminal 50 by screw 45 through board through-hole 35 from the lower surface of U-shaped conductive spacer 40. In this configuration, U-shaped conductive spacer 40 having been soldered to an upper surface of second board 32 is screwed to round terminal 50 even from the lower surface of second board 32. Particularly in the configuration in FIG. 4, round terminal 50 and U-shaped conductive spacer 40 are fastened together, and therefore, round terminal 50 and second board 32 are fixed to unit case 24 simultaneously. Furthermore, as illustrated in FIG. 3, round terminal 50 is screwed from the lower surface of second board 32, thereby causing round terminal 50 to be hidden by second board 32 and being invisible. Therefore, even when round terminal 50 is displaced, the displacement is not visually confirmed. Hence, round terminal 50 is required to be surely held to be positioned. In the above-described configuration, terminal screw hole 53 of round terminal 50 is surely aligned with threaded hole 138 of rectangular nut 38 held in nut holder wall 25, thereby allowing assembly work to be smoothly performed. Furthermore, second board 32 screwed to unit case 24 allows first board 31 to be fixed to the lower surface of second board 32.

External output terminal 23 is a terminal configured to output, to an external device, an output voltage of battery cells 1 connected in series or parallel to one another. External output terminal 23 is connected to the total output of battery block 21 via harness 60.

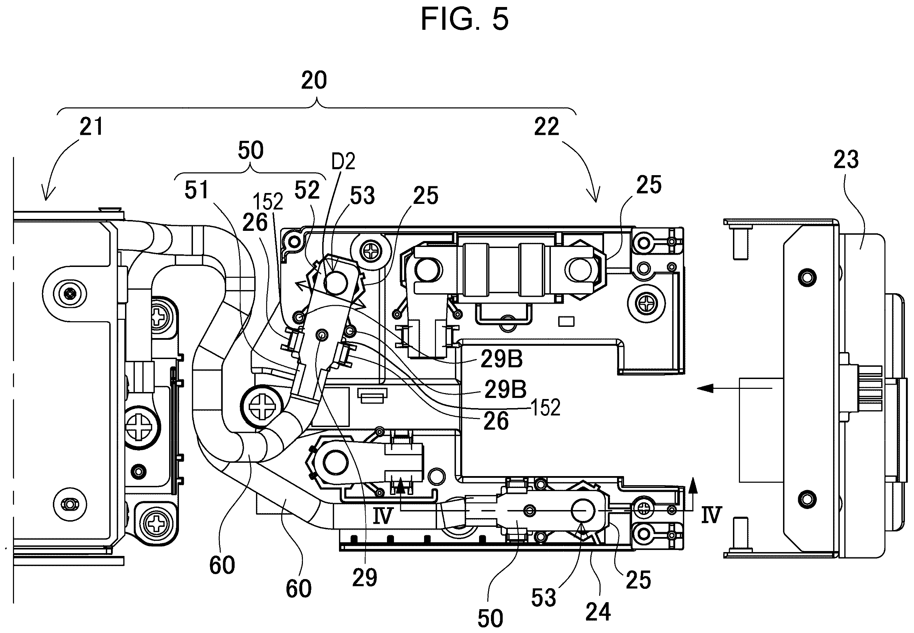

Round terminals 50 and harnesses 60 are disposed on the lower surface of circuit board 30, as illustrated in FIG. 3 and FIG. 5. Harnesses 60 are connected to the output of battery block 21. Round terminals 50 are electrically connected to circuit board 30.

### Round Terminal 50

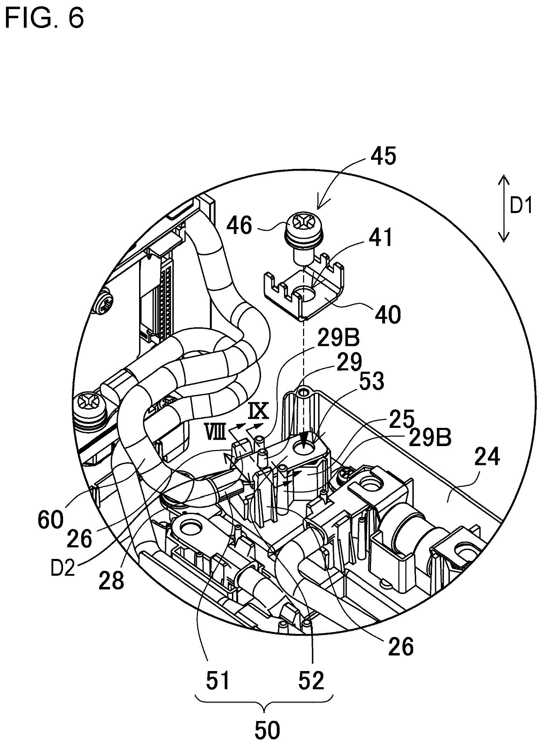

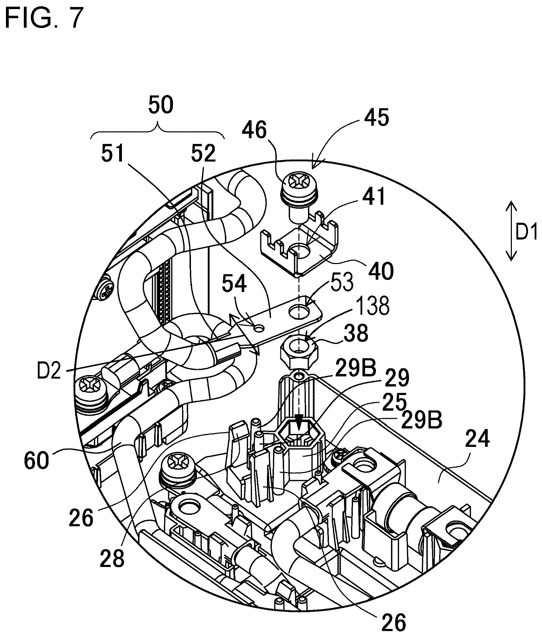

Round terminal 50 includes crimp part 51 and flat part 52 as illustrated in the perspective views of FIG. 6 and FIG. 7. Crimp part 51 and flat part 52 are made of a metal plate, such as aluminum, unitarily with each other.

Crimp part 51 is configured to be crimped with harness 60 to be connected to harness 60. Crimp part 51 includes flat crimp pieces extending to right and left directions before crimping, and the flat crimp pieces are crimped with a stranded wire extending from an end of harness 60 with a plier or another tool so as to sandwich the stranded wire, thereby attaching crimp part 51 to the end of harness 60.

Flat part 52 is made of a flat plate with a battledore shape. An end of flat part 52 has terminal screw hole 53 therein. Terminal screw hole 53 passes through flat part 52 in up and down directions D1. As illustrated in FIG. 6, terminal screw hole 53 is a hole into which screw 45 is inserted to fix round terminal 50 to unit case 24 with screw 45. As illustrated in FIG. 7, unit case 24 includes nut holder walls 25 on a bottom surface to hold rectangular nut 38. Nut holder walls 25 are provided inside unit case 24. Nut holder walls 25 are preferably formed unitarily with unit case 24. While each nut holder wall 25 holds rectangular nut 38 to prevent rectangular nut 38 from rotating, rectangular nut 38 is aligned with terminal screw hole 53 opened in flat part 52 of each round terminal 50 and is screwed with screw 45. In the screwing, round terminal 50 is fastened together with a connection object to be electrically connected by screw 45. A threaded hole is formed in the connection object. In the examples illustrated in FIG. 6 and FIG. 7, round terminal 50 is fastened together with U-shaped conductive spacer 40 fixed to second board 32, as the connection object.

### Guide Piece 26

Output unit 22 includes a pair of guide pieces 26. The pair of guide pieces 26 hold right and left sides of flat part 52 of round terminal 50 while round terminal 50 is fixed to unit case 24 with terminal screw hole 53. In other words, the pair of guide pieces 26 respectively contact edges 152 of flat part 52 of round terminal 50 in right and left directions D2 crossing up and down directions D1 and hold edges 152 while round terminal 50 is fixed to unit case 24 with screw 45 inserted into terminal screw hole 53. In according to the embodiment, right and left directions D2 is perpendicular to up and down directions D1. In this configuration, guide pieces 26 provided on the right and left sides of flat part 52 of round terminal 50 prevent round terminal 50 from rotating due to a repulsive force of harness 60 or the like, thereby providing stable screwing.

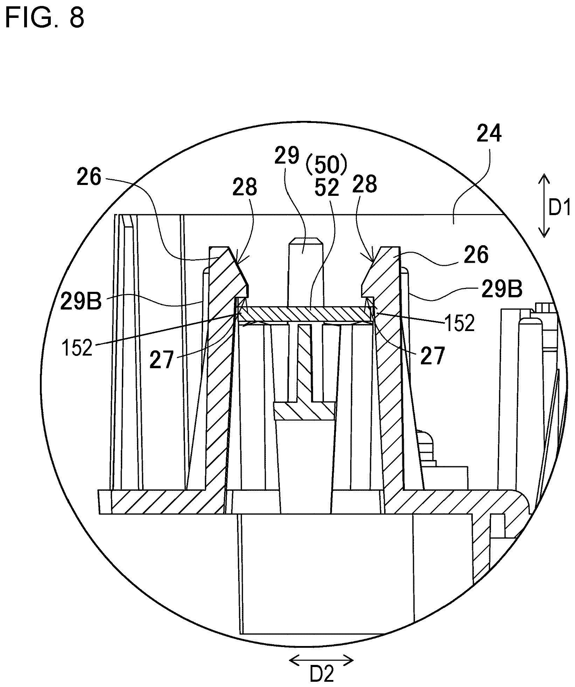

As illustrated in the cross-sectional view of FIG. 8, each of the pair of guide pieces 26 has overlapping surfaces 27 extending continuously from the right and left sides of round terminal 50. Each of overlapping surfaces 27 overlaps an end portion of the upper surface of round terminal 50 in up and down directions D1 while holding the right and left sides of round terminal 50. In this configuration, respective overlapping surfaces 27 of guide pieces 26 prevent round terminal 50 from being lifted due to a repulsive force of harness 60. In particular, a round terminal may provide a problem that, when a round shaped portion of a crimp part is secured by a hook or the like, a repulsive force of a harness may cause the round terminal to be lifted or rotate. In this case, the round terminal is hardly positioned while screwing, the round terminal may be displaced after positioning, and consequently, assembly workability was hindered. In contrast, in power supply device 100 according to the embodiment, guide pieces 26 have overlap surfaces 27 providing an advantageous effect preventing the round terminal itself from unlikely being lifted and rotating, and are surely screwed.

Guide pieces 26 are made of elastic material. Guide pieces 26 are preferably formed unitarily with unit case 24. Unit case 24 made of resin easily provides guide pieces 26 with elasticity. Alternatively, guide pieces 26 may be a member independent from the unit case and fixed to an inner surface of the unit case by, e.g., adhesion or engagement.

Overlapping surface 27 of guide piece 26 preferably has a hook shape. In other words, as illustrated in FIG. 8, inclined surface 28 inclined from an end of each of guide pieces 26 in a direction gradually narrows the opening, round terminal 50 is more easily guided between guide pieces 26. The lower ends of inclined surfaces 28 form a narrowest portion at which the gap between inclined surfaces 28 is the narrowest. The narrowest portion is configured to be narrower than flat part 52 of round terminal 50. Thus, when flat part 52 is pushed in between guide pieces 26 while guide pieces 26 elastically deform, the upper surface of flat part 52 is pressed by hook-shaped overlapping surfaces 27. This configuration prevents flat part 52 from being removed and lifted.

### Positioning Hole 54, Positioning Pin 29

As illustrated in FIG. 6 and FIG. 7, flat part 52 of round terminal 50 has positioning hole 54 spaced away from terminal screw hole 53. Positioning hole 54 passes through flat part 52 in up and down directions D1. Unit case 24 includes positioning pin 29 configured to be inserted into positioning hole 54 so as to position terminal screw hole 53 of round terminal 50 while being fixed. In this configuration, positioning pin 29 is inserted into positioning hole 54 to position round terminal 50 and prevent round terminal 50 from rotating due to a repulsive force of harness 60.

Positioning hole 54 is formed between terminal screw hole 53 and crimp unit 51. Positioning hole 54 preferably has different diameter from terminal screw hole 53. This configuration allows positioning hole 54 to be more easily visually distinguished from terminal screw hole 53. In the example in FIG. 7, positioning hole 54 has a smaller diameter than terminal screw hole 53.

### Guide Pin 29B

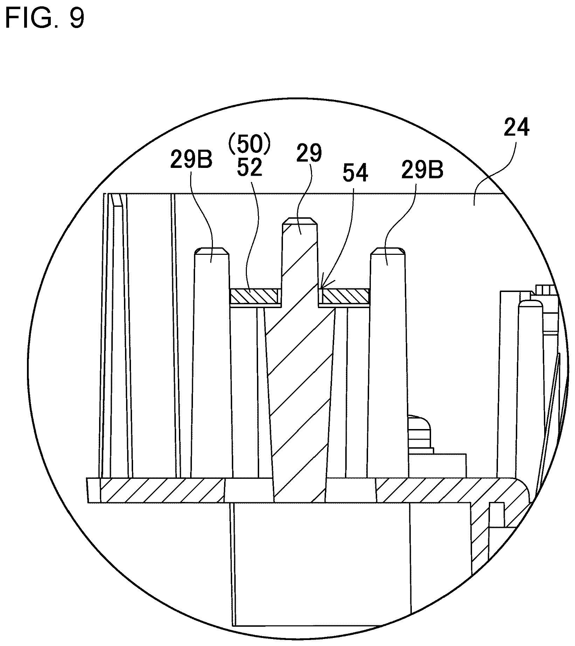

Unit case 24 further includes a pair of guide pins 29B at positions different from the positions of guide pieces 26, as illustrated in FIG. 6 and FIG. 7. As illustrated in the cross-sectional view of FIG. 9, guide pins 29B respectively contact the left and right sides of flat part 52 of round terminal 50 to position round terminal 50. Thus, guide pins 29B in addition to the pair of guide pieces 26 further prevent the rotation of round terminal 50. In particular, even when a repulsive force of harness 60 is greater, the combination of guide pieces 26 and guide pins 29B can resist the rotation.

Guide pins 29B are preferably disposed between nut holder wall 25 and each of the pair of guide pieces 26, as illustrated in FIG. 7. Thus, side surfaces of flat part 52 are guided in a distributed manner.

Each guide pin 29B has a circular columnar shape. Guide pin 29B is formed unitarily with unit case 24. Guide pin 29B is preferably has the same shape as positioning pin 29. Thus, guide pins 29B and positioning pins 29 are collectively provided inside unit case 24.

### INDUSTRIAL APPLICABILITY

A power supply device and a round terminal securing structure according to the present disclosure are suitably used as a power supply for portable electric machinery such as electric cleaners and electric tools. Furthermore, the power supply device and the round terminal securing structure can be appropriately used as power supply devices for mobile units such as electric assisted bicycles and electric carts, and used in electrical connection applications using a round terminal in various types of electrical equipment.

### REFERENCE MARKS IN THE DRAWINGS

100 power supply device
1 battery cell
10 housing
11 lid case
12 opening case
20 internal assembly
21 battery block
22 output unit
23 external output terminal
24 unit case
25 nut holder wall
26 guide piece
27 overlapping surface
28 inclined surface
29 positioning pin
29B guide pin
30 circuit board
31 first board
32 second board
33 spacer
34 board connector
35 board through-hole
38 rectangular nut
40 U-shaped conductive spacer
41 spacer screw hole
45 screw
46 screw head
50 round terminal
51 crimp part
52 flat part
53 terminal screw hole
54 positioning hole
60 harness
950 round terminal
951 crimp part
953 terminal screw hole
956 standing piece
960 harness

## Claims

1. A round terminal securing structure comprising:
a round terminal (50) including
a flat part (52) including an end portion having a terminal screw hole (53) passing through the flat part (52) in up and down directions (D1), and
a crimp part (51) crimped together with an end of a harness (60) so as to be connected to the end of the harness (60); and
a pair of guide pieces (26) respectively holding edges of the flat part (52) of the round terminal (50) in right and left directions (D2) perpendicular to the up and down directions (D1) while the round terminal (50) is fixed, in use, to a connection object (40) with a screw (45) inserted into the terminal screw hole (53) and fastening the round terminal (50) and the connection object (40) together, wherein the guide pieces (26) are elastic, and each of the pair of guide pieces (26) has an overlapping surface (27) extending continuously from a corresponding one of right and left sides of the round terminal (50) and overlapping the end portion of the round terminal (50) in the up and down directions (D1),
the round terminal securing structure being **characterized in that** it also comprises a pair of guide pins (29B), each of the guide pins (29B) being disposed on a corresponding one of right and left sides of the flat part (52) of the round terminal (50) at a position different from positions of the pair of guide pieces (26) while the round terminal (50) is fixed, in use, to a housing (10) with the screw (45) inserted into the terminal screw hole (53).

2. The round terminal securing structure according to claim 1, **characterized in that** each of the guide pieces (26) has a hook shape having the overlapping surface (27).

3. The round terminal securing structure according to claim 1 or 2, **characterized in that** the guide pins (29B) have circular columnar shapes.

4. The round terminal securing structure according to any of claims 1 to 3, **characterized in that** the pair of the guide pieces (26) and the pair of guide pins (29B) are fixed to a same part of the round terminal securing structure.

5. A power supply device (100), comprising:
the round terminal securing structure according to any of the previous claims;
a battery cell (1), the harness (60) being connected to the battery cell (1);
a circuit board (30) electrically connected to the round terminal (50); and
the housing (10) accommodating the battery cell (1), the circuit board (30), the harness (60) and the round terminal (50) therein, the round terminal (50) being fixed to the housing (10) with the screw (45).

6. The power supply device according to claim 5, **characterized in that** the flat part (52) of the round terminal (50) has a positioning hole (54) passing through the flat part (52) in the up and down directions (D1), the positioning hole (54) being spaced away from the terminal screw hole (53), and
the power supply device (100) further comprises a positioning pin (29) inserted into the positioning hole (54) while the round terminal (50) is fixed to the housing (10) with the screw (45) passing through the terminal screw hole (53).

7. The power supply device according to claim 6, **characterized in that** the positioning hole (54) is disposed between the terminal screw hole (53) and the crimp part (51).

8. The power supply device according to any of claims 6 or 7, **characterized in that** the positioning hole (54) has a smaller diameter than the terminal screw hole (53).

9. The power supply device according to any of claims 5 to 8, **characterized in that** the pair of the guide pins (29B) is formed unitarily with the housing (10).

10. The power supply device according to any of claims 5 to 9, **characterized in that** it further comprises:
a rectangular nut (38) having a threaded hole (138) therein aligned with the terminal screw hole (53) of the round terminal (50); and
a nut holder wall (25) holding the rectangular nut (38) to prevent the rectangular nut (38) from rotating.

11. The power supply device according to claim 10, **characterized in that** the pair of the guide pieces (26) and the nut holder wall (25) are formed unitarily with the housing (10).

12. The power supply device according to any of claims 5 to 11, **characterized in that** it further comprises:
a U-shaped conductive spacer (40) fixed to the circuit board (30), the U-shaped conductive spacer (40) having a cross section with a squared U-shape, the U-shaped conductive spacer (40) having a spacer screw hole (41) passing through the U-shaped conductive spacer (40), wherein
the circuit board (30) has a board through-hole (35) provided therein in a region of the circuit board (30) to which the U-shaped conductive spacer (40) is fixed.

13. The power supply device according to any of claims 5 to 11, **characterized in that** the housing (10) comprises a unit case (24) holding the circuit board (30);
and the guide pieces (26) are formed unitarily on the unit case (24), which also includes the pair of guide pins (29B).

14. The power supply device according to claim 13 when dependent on claim 10 or claim 11, **characterized in that** the nut holder wall (25) is formed unitarily with the unit case (24).

## Patentansprüche

1. Rundklemmen-Befestigungsstruktur, umfassend:
eine Rundklemme (50), umfassend
einen flachen Teil (52), der einen Endabschnitt mit einem Klemmenschraubenloch (53) aufweist, das sich durch den flachen Teil (52) in Auf- und Abwärtsrichtungen (D1) erstreckt, und
einen Crimpteil (51), der zusammen mit einem Ende eines Kabelbaums (60) verpresst ist, um mit dem Ende des Kabelbaums (60) verbunden zu sein; und
ein Paar von Führungsstücken (26), die jeweils Kanten des flachen Teils (52) der Rundklemme (50) in Rechts- und Linksrichtungen (D2) senkrecht zu den Auf- und Abwärtsrichtungen (D1) halten, während die Rundklemme (50) im Gebrauch an einem Verbindungsgegenstand (40) mittels einer Schraube (45) befestigt ist, die in das Klemmenschraubenloch (53) eingeführt ist und die Rundklemme (50) und den Verbindungsgegenstand (40) zusammen befestigt, wobei die Führungsstücke (26) elastisch sind, und jedes des Paars von Führungsstücken (26) eine Überlappungsfläche (27) aufweist, die sich kontinuierlich von einer entsprechenden der rechten und linken Seiten der Rundklemme (50) erstreckt und den Endabschnitt der Rundklemme (50) in den Auf- und Abwärtsrichtungen (D1) überlappt,
wobei die Rundklemmen-Befestigungsstruktur **dadurch gekennzeichnet ist, dass** sie ferner ein Paar von Führungsstiften (29B) umfasst, wobei jeder der Führungsstifte (29B) an einer entsprechenden der rechten und linken Seiten des flachen Teils (52) der Rundklemme (50) an einer Position angeordnet ist, die von den Positionen des Paars von Führungsstücken (26) verschieden ist, während die Rundklemme (50) im Gebrauch an einem Gehäuse (10) mittels der Schraube (45) befestigt ist, die in das Klemmenschraubenloch (53) eingeführt ist.

2. Rundklemmen-Befestigungsstruktur nach Anspruch 1, **dadurch gekennzeichnet, dass** jedes der Führungsstücke (26) eine Hakenform mit der Überlappungsfläche (27) aufweist.

3. Rundklemmen-Befestigungsstruktur nach Anspruch 1 oder 2, **dadurch gekennzeichnet, dass** die Führungsstifte (29B) kreisförmige säulenförmige Formen aufweisen.

4. Rundklemmen-Befestigungsstruktur nach einem der Ansprüche 1 bis 3, **dadurch gekennzeichnet, dass** das Paar von Führungsstücken (26) und das Paar von Führungsstiften (29B) an einem gleichen Teil der Rundklemmen-Befestigungsstruktur befestigt sind.

5. Stromversorgungsvorrichtung (100), umfassend:
die Rundklemmen-Befestigungsstruktur nach einem der vorhergehenden Ansprüche;
eine Batteriezelle (1), wobei der Kabelbaum (60) mit der Batteriezelle (1) verbunden ist;
eine Leiterplatte (30), die elektrisch mit der Rundklemme (50) verbunden ist; und
das Gehäuse (10), das die Batteriezelle (1), die Leiterplatte (30), den Kabelbaum (60) und die Rundklemme (50) darin aufnimmt, wobei die Rundklemme (50) mittels der Schraube (45) am Gehäuse (10) befestigt ist.

6. Stromversorgungsvorrichtung nach Anspruch 5, **dadurch gekennzeichnet, dass** der flache Teil (52) der Rundklemme (50) ein Positionierungsloch (54) aufweist, das sich durch den flachen Teil (52) in den Auf- und Abwärtsrichtungen (D1) erstreckt, wobei das Positionierungsloch (54) vom Klemmenschraubenloch (53) beabstandet ist, und
die Stromversorgungsvorrichtung (100) ferner einen Positionierungsstift (29) umfasst, der in das Positionierungsloch (54) eingeführt ist, während die Rundklemme (50) mittels der Schraube (45), die durch das Klemmenschraubenloch (53) hindurchgeht, am Gehäuse (10) befestigt ist.

7. Stromversorgungsvorrichtung nach Anspruch 6, **dadurch gekennzeichnet, dass** das Positionierungsloch (54) zwischen dem Klemmenschraubenloch (53) und dem Crimpteil (51) angeordnet ist.

8. Stromversorgungsvorrichtung nach einem der Ansprüche 6 oder 7, **dadurch gekennzeichnet, dass** das Positionierungsloch (54) einen kleineren Durchmesser als das Klemmenschraubenloch (53) aufweist.

9. Stromversorgungsvorrichtung nach einem der Ansprüche 5 bis 8, **dadurch gekennzeichnet, dass** das Paar von Führungsstiften (29B) einstückig mit dem Gehäuse (10) ausgebildet ist.

10. Stromversorgungsvorrichtung nach einem der Ansprüche 5 bis 9, **dadurch gekennzeichnet, dass** sie ferner umfasst:
eine rechteckige Mutter (38) mit einem darin ausgebildeten Gewindeloch (138), das mit dem Klemmenschraubenloch (53) der Rundklemme (50) fluchtet; und
eine Mutterhaltewand (25), die die rechteckige Mutter (38) hält, um die rechteckige Mutter (38) am Drehen zu hindern.

11. Stromversorgungsvorrichtung nach Anspruch 10, **dadurch gekennzeichnet, dass** das Paar von Führungsstücken (26) und die Mutterhaltewand (25) einstückig mit dem Gehäuse (10) ausgebildet sind.

12. Stromversorgungsvorrichtung nach einem der Ansprüche 5 bis 11, **dadurch gekennzeichnet, dass** sie ferner umfasst:
einen U-förmigen leitfähigen Abstandshalter (40), der an der Leiterplatte (30) befestigt ist, wobei der U-förmige leitfähige Abstandshalter (40) einen Querschnitt mit einer quadratischen U-Form aufweist, wobei der U-förmige leitfähige Abstandshalter (40) ein Abstandshalter-Schraubenloch (41) aufweist, das sich durch den U-förmigen leitfähigen Abstandshalter (40) erstreckt, wobei
die Leiterplatte (30) ein darin vorgesehenes Platinen-Durchgangsloch (35) in einem Bereich der Leiterplatte (30) aufweist, an dem der U-förmige leitfähige Abstandshalter (40) befestigt ist.

13. Stromversorgungsvorrichtung nach einem der Ansprüche 5 bis 11, **dadurch gekennzeichnet, dass** das Gehäuse (10) ein Einheitsgehäuse (24) umfasst, das die Leiterplatte (30) hält;
und die Führungsstücke (26) einstückig am Einheitsgehäuse (24) ausgebildet sind, welches auch das Paar von Führungsstiften (29B) umfasst.

14. Stromversorgungsvorrichtung nach Anspruch 13, wenn abhängig von Anspruch 10 oder Anspruch 11, **dadurch gekennzeichnet, dass** die Mutterhaltewand (25) einstückig mit dem Einheitsgehäuse (24) ausgebildet ist.

## Revendications

1. Structure de fixation de borne ronde comprenant :
une borne ronde (50) comprenant
une partie plate (52) comprenant une partie d'extrémité présentant un trou de vis de borne (53) traversant la partie plate (52) dans des directions haut et bas (D1), et
une partie de sertissage (51) sertie avec une extrémité d'un harnais (60) de manière à être reliée à l'extrémité du harnais (60) ; et
une paire de pièces de guidage (26) maintenant respectivement des bords de la partie plate (52) de la borne ronde (50) dans des directions droite et gauche (D2) perpendiculaires aux directions haut et bas (D1) tandis que la borne ronde (50) est fixée, en utilisation, à un objet de connexion (40) au moyen d'une vis (45) insérée dans le trou de vis de borne (53) et fixant ensemble la borne ronde (50) et l'objet de connexion (40), dans laquelle les pièces de guidage (26) sont élastiques, et chacune de la paire de pièces de guidage (26) présente une surface de recouvrement (27) s'étendant en continu depuis un côté correspondant parmi les côtés droit et gauche de la borne ronde (50) et recouvrant la partie d'extrémité de la borne ronde (50) dans les directions haut et bas (D1),
la structure de fixation de borne ronde étant **caractérisée en ce qu'**elle comprend en outre une paire de goupilles de guidage (29B), chacune des goupilles de guidage (29B) étant disposée sur un côté correspondant parmi les côtés droit et gauche de la partie plate (52) de la borne ronde (50) à une position différente des positions de la paire de pièces de guidage (26) tandis que la borne ronde (50) est fixée, en utilisation, à un boîtier (10) au moyen de la vis (45) insérée dans le trou de vis de borne (53).

2. Structure de fixation de borne ronde selon la revendication 1, **caractérisée en ce que** chacune des pièces de guidage (26) présente une forme de crochet présentant la surface de recouvrement (27).

3. Structure de fixation de borne ronde selon la revendication 1 ou 2, **caractérisée en ce que** les goupilles de guidage (29B) présentent des formes colonnaires circulaires.

4. Structure de fixation de borne ronde selon l'une quelconque des revendications 1 à 3, **caractérisée en ce que** la paire de pièces de guidage (26) et la paire de goupilles de guidage (29B) sont fixées à une même partie de la structure de fixation de borne ronde.

5. Dispositif d'alimentation électrique (100), comprenant :
la structure de fixation de borne ronde selon l'une quelconque des revendications précédentes ;
une cellule de batterie (1), le harnais (60) étant relié à la cellule de batterie (1) ;
une carte de circuit (30) électriquement reliée à la borne ronde (50) ; et
le boîtier (10) logeant en son sein la cellule de batterie (1), la carte de circuit (30), le harnais (60) et la borne ronde (50), la borne ronde (50) étant fixée au boîtier (10) au moyen de la vis (45).

6. Dispositif d'alimentation électrique selon la revendication 5, **caractérisé en ce que** la partie plate (52) de la borne ronde (50) présente un trou de positionnement (54) traversant la partie plate (52) dans les directions haut et bas (D1), le trou de positionnement (54) étant espacé du trou de vis de borne (53), et
le dispositif d'alimentation électrique (100) comprend en outre une goupille de positionnement (29) insérée dans le trou de positionnement (54) tandis que la borne ronde (50) est fixée au boîtier (10) au moyen de la vis (45) traversant le trou de vis de borne (53).

7. Dispositif d'alimentation électrique selon la revendication 6, **caractérisé en ce que** le trou de positionnement (54) est disposé entre le trou de vis de borne (53) et la partie de sertissage (51).

8. Dispositif d'alimentation électrique selon l'une quelconque des revendications 6 ou 7, **caractérisé en ce que** le trou de positionnement (54) présente un diamètre plus petit que le trou de vis de borne (53).

9. Dispositif d'alimentation électrique selon l'une quelconque des revendications 5 à 8, **caractérisé en ce que** la paire de goupilles de guidage (29B) est formée d'un seul tenant avec le boîtier (10).

10. Dispositif d'alimentation électrique selon l'une quelconque des revendications 5 à 9, **caractérisé en ce qu'**il comprend en outre :
un écrou rectangulaire (38) présentant un trou fileté (138) aligné avec le trou de vis de borne (53) de la borne ronde (50) ; et
une paroi de maintien d'écrou (25) maintenant l'écrou rectangulaire (38) afin d'empêcher l'écrou rectangulaire (38) de tourner.

11. Dispositif d'alimentation électrique selon la revendication 10, **caractérisé en ce que** la paire de pièces de guidage (26) et la paroi de maintien d'écrou (25) sont formées d'un seul tenant avec le boîtier (10).

12. Dispositif d'alimentation électrique selon l'une quelconque des revendications 5 à 11, **caractérisé en ce qu'**il comprend en outre :
une entretoise conductrice en forme de U (40) fixée à la carte de circuit (30), l'entretoise conductrice en forme de U (40) présentant une section transversale en forme de U carré, l'entretoise conductrice en forme de U (40) présentant un trou de vis d'entretoise (41) traversant l'entretoise conductrice en forme de U (40), dans lequel
la carte de circuit (30) présente un trou traversant de carte (35) ménagé dans une région de la carte de circuit (30) à laquelle l'entretoise conductrice en forme de U (40) est fixée.

13. Dispositif d'alimentation électrique selon l'une quelconque des revendications 5 à 11, **caractérisé en ce que** le boîtier (10) comprend un boîtier d'unité (24) maintenant la carte de circuit (30) ;
et les pièces de guidage (26) sont formées d'un seul tenant sur le boîtier d'unité (24), qui comprend également la paire de goupilles de guidage (29B).

14. Dispositif d'alimentation électrique selon la revendication 13 lorsqu'elle dépend de la revendication 10 ou de la revendication 11, **caractérisé en ce que** la paroi de maintien d'écrou (25) est formée d'un seul tenant avec le boîtier d'unité (24).
